# EUROPEAN PATENT APPLICATION

(11) **EP 3 032 502 A1**
(43) Date of publication of application: **15.06.2016**
(21) Application number: 14197433.7
(22) Date of filing: 11.12.2014
(51) Int. Cl.: G07C 9/00, B60R 25/23, G06F 3/042

(54) **Authenticating a user for access to a physical space using an optical sensor**

(71) Applicant: ASSA ABLOY AB, 107 23 Stockholm (SE)
(72) Inventor: Carlsson, Stefan, 163 44 Spånga (SE); Almström, Joakim, 141 37 Huddinge (SE)
(74) Representative: Kransell & Wennborg KB

(57) **Abstract**

It is presented a method for authenticating a user for access to a physical space (16), the method being performed in an access control device (3) connected to a physical lock device (1). The method comprises the steps of: detecting, using an optical sensor (2), a sequence of positions of a user touching a virtual keypad (4), the virtual keypad being non-electric; determining whether the sequence matches a predetermined sequence; and sending an unlock signal to the physical lock device when the sequence matches the predetermined sequence.

## Description

### TECHNICAL FIELD

The invention relates to conditionally authenticating a user for access to a physical space. In particular, an optical sensor is used for the authentication to allow the use of a virtual keypad.

### BACKGROUND

Lock devices and key devices are evolving from the traditional pure mechanical locks. These days, there are wireless interfaces for electronic lock devices. Moreover, keypads are often used as part of the access control to gain access to buildings, particularly for commercial buildings and apartment buildings. The user punches the keys in a particular order, corresponding to a code, to get access to the locked space. This can be combined with other authentication methods for added security, such as access cards, etc.

Using keypads is convenient since the user does not need to have a physical authentication item; the user only needs to remember the code to gain access. However, the physical structure of the keypad often poses problems. The keypad requires wires for powering and signalling and the housing of the keypad is often bulky, whereby the installation process for the keypad is demanding and complicated. Also, after installation, any change in number of keys or placement of keys requires a new keypad. While some flexibility in appearance can be achieved by customising a faceplate of the keypad, the keys are much more difficult to customise.

### SUMMARY

It is an object to provide keypad functionality which is more flexible in its physical appearance.

According to a first aspect, it is presented a method for authenticating a user for access to a physical space, the method being performed in an access control device connected to a physical lock device. The method comprises the steps of: detecting, using an optical sensor, a sequence of positions of a user touching a virtual keypad, the virtual keypad being non-electric; determining whether the sequence matches a predetermined sequence; and sending an unlock signal to the physical lock device when the sequence matches the predetermined sequence. By using the non-electric virtual keypad, its physical structure and appearance can easily be customised according to a particular installation.

In the step of detecting, the virtual keypad may comprise a piece of paper comprising indications of possible touch positions for a user to enter a code.

The method may further comprise the steps of: exchanging digital authentication data with a portable device of the user; determining whether the portable device is authenticated based on the digital authentication data. In such a case, the step of sending an unlock signal is only performed when the portable device is authenticated.

The method may further comprise the steps of: detecting a long press in a calibration position of the virtual keypad using the optical sensor; and calibrating a position determination of the optical sensor based on the calibration position.

The step of detecting may comprise detecting each position in the sequence of positions by continuously detecting positions of fingers of the user and detecting when a finger touches the virtual keypad.

According to a second aspect, it is presented an access control device arranged to authenticate a user for access to a physical space. The access control device comprises: a processor; and a memory storing instructions that, when executed by the processor, causes the access control device to: detect, using an optical sensor, a sequence of positions of a user touching a virtual keypad, the virtual keypad being non-electric; determine whether the sequence matches a predetermined sequence; and send an unlock signal to the physical lock device when the sequence matches the predetermined sequence.

The virtual keypad may comprise a piece of paper comprising indications of possible touch positions for a user to enter a code.

The access control device may further comprise instructions that, when executed by the processor, causes the access control device to: exchange digital authentication data with a portable device of the user; determine whether the portable device is authenticated based on the digital authentication data. In such a case, the instructions to send an unlock signal comprise instructions that, when executed by the processor, causes the access control device to only send the unlock signal when the portable device is authenticated.

The access control device may further comprise instructions that, when executed by the processor, causes the access control device to: detect a long press in a calibration position of the virtual keypad using the optical sensor; and calibrate a position determination of the optical sensor based on the calibration position.

The instructions to detect may comprise instructions that, when executed by the processor, causes the access control device to detect each position in the sequence of positions by continuously detecting positions of fingers of the user and detecting when a finger touches the virtual keypad.

According to a third aspect, it is presented a computer program for authenticating a user for access to a physical space. The computer program comprises computer program code which, when run on a access control device causes the access control device to: detect, using an optical sensor, a sequence of positions of a user touching a virtual keypad, the virtual keypad being non-electric; determine whether the sequence matches a predetermined sequence; and send an unlock signal to the physical lock device when the sequence matches the predetermined sequence.

According to a fourth aspect, it is presented a computer program product comprising a computer program according to the third aspect and a computer readable means on which the computer program is stored. Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram showing an environment in which embodiments presented herein can be applied;
Fig 2 is a schematic diagram of how the optical sensor of Fig 1 operates;
Fig 3 is a schematic diagram of how the optical sensor of Fig 1 operates with the virtual keypad of Fig 1;
Figs 4A-B are schematic diagrams illustrating embodiments of the virtual keypad of Figs 1 and 3;
Fig 5 is a flow chart illustrating embodiments of methods performed in the access control device of Fig 1 for authenticating a user for access to a physical space;
Figs 6A-B are schematic diagrams illustrating embodiments of the access control device of Fig 1; and
Fig 7 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

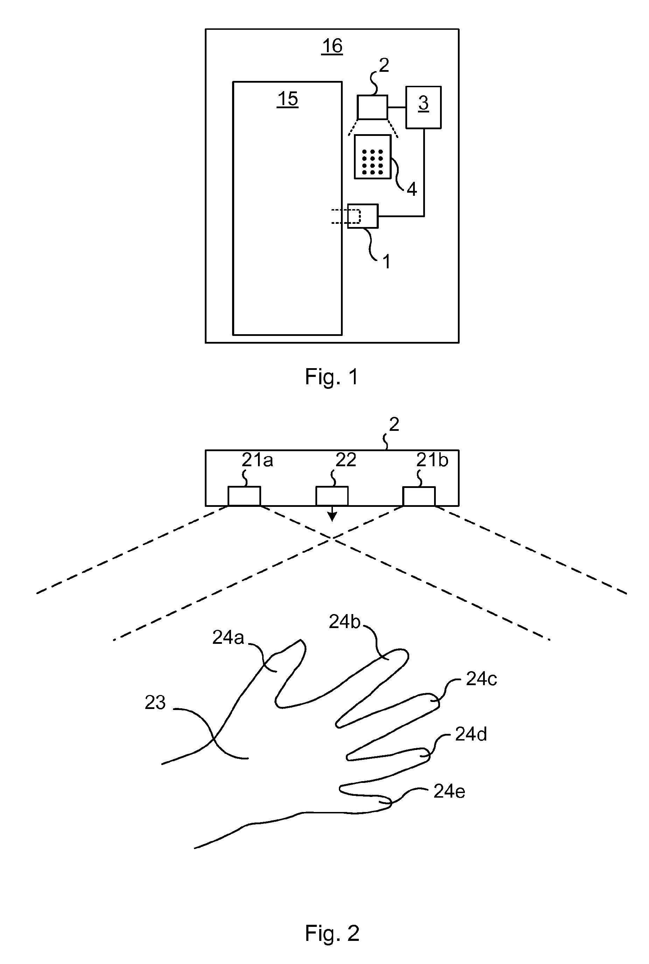

Fig 1 is a schematic diagram showing an environment in which embodiments presented herein can be applied.

Access to a physical space 16 is restricted by a physical barrier 15 which is selectively unlockable. For instance, the barrier 15 can be a door, gate, window, etc. In order to unlock the barrier 15, an access control device 3 is provided. The access control device 3 is connected to a physical lock device 1, which is controllable by the access control device 3 to be set in an unlocked state or locked state. In this embodiment, the access control device 3 is mounted close to the physical lock device 1.

An optical sensor 2 is placed such that it can detect movements of the fingers of a user, in the vicinity of a virtual keypad 4. In this way, the user can touch positions of the virtual keypad 4 in a certain sequence corresponding to a code, e.g. numeric code. The access control device 3 compares the sequence with a predetermined sequence, authenticating the user and thus grants or denies access.

When access is granted, the access control device 3 sends an unlock signal to the lock device 1, whereby the lock device 1 is set in an unlocked state. In this embodiment, this can e.g. imply a signal over a wire-based communication, e.g. using Universal Serial Bus (USB), Ethernet, or even a simple electric connection (e.g. to the lock device 1), or alternatively a wireless interface. When the lock device 1 is in an unlocked state, the barrier 15 can be opened and when the lock device 1 is in a locked state, the barrier 15 cannot be opened. In this way, access to a closed space 16 is controlled by the access control device 3. It is to be noted that the access control device 3 and/or the lock device 1 can be mounted in a fixed structure by the physical barrier 15 (as shown) or in the physical barrier 15 (not shown).

Fig 2 is a schematic diagram of how the optical sensor 2 of Fig 1 operates. The optical sensor 2 comprises one or more cameras 21a-b for detecting positions of fingers 24a-e of a hand 23 of a user. Optionally, a light source 22 is also provided to improve the detection ability of the cameras 21a-b. In one embodiment, the cameras 21a-b are operative in the infrared spectrum. This allows the light source 22 to be an infrared light source, preventing the light source from illuminating the hand and surroundings with visible light.

The optical sensor 2 may include additional components (not shown) to process the images from the cameras 21a-b to thereby determine the positions of the fingers 24a-e in a three-dimensional coordinate system. This detection can occur continuously when the optical sensor is active 2. Continuously is here to be interpreted as detecting the positions of the fingers with sample periods that are small enough not to miss significant movements of the fingers. In other words, the detection can occur using coordinates which are successively determined at a certain frequency. Alternatively, the optical sensor sends the images to the access control device (or other device) to thereby determine the positions of the fingers 24a-e in the three-dimensional coordinate system. The images can be any type of digital representation of a captured optical view from the camera 21a-b. For instance, the images can be infrared images, images in the visible light spectrum or any other suitable representation.

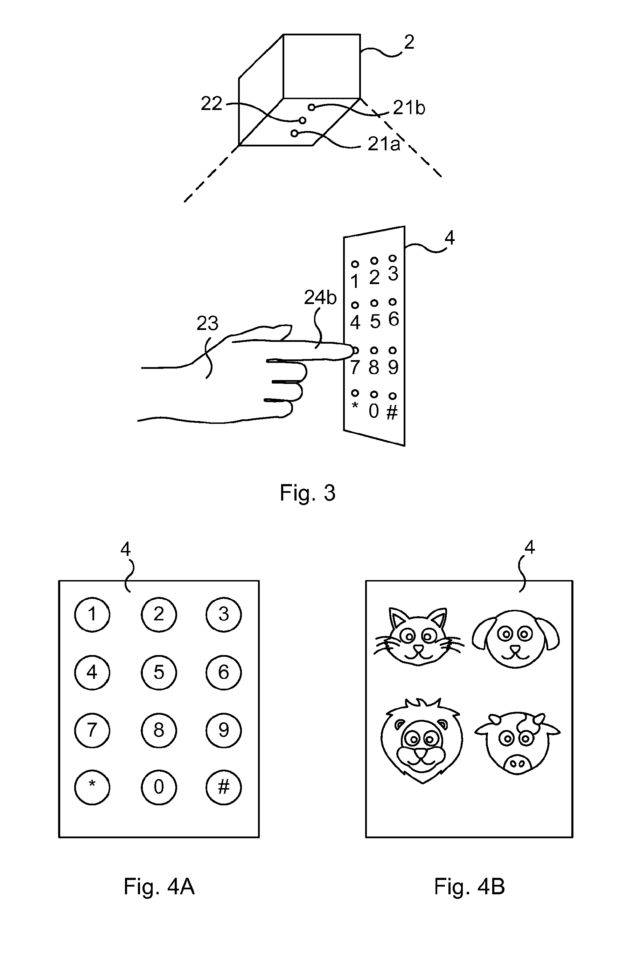

Fig 3 is a schematic diagram of how the optical sensor 2 of Fig 2 operates with the virtual keypad 4 of Fig 1.

As explained above, the optical sensor 2 detects movements of the fingers and can thus detect when the virtual keypad 4 is touched, e.g. with an index finger 24b of a hand 23 of a user. In this way, a sequence of positions of the user repeatedly touching various positions of the virtual keypad 4 can be detected. In this example, the virtual keypad 4 has a number of predetermined positions indicated, e.g. corresponding to digits of a traditional keypad.

The virtual keypad 4 is non-electric. This implies that the virtual keypad does not comprise any electrical components, nor is it electrically powered. Instead, the virtual keypad 4 can be of any suitable physical structure which allows great flexibility in the physical appearance of the virtual keypad. For instance, the virtual keypad 4 could be a printed virtual keypad on a piece of paper or cardboard, allowing convenient replacement and/or customisation. Alternatively, the virtual keypad 4 can be made with markings on a sheet of glass, brass, wood, concrete or any other material which is considered suitable for the surrounding structures. It is to be noted that the virtual keypad can for part of surrounding structures, e.g. in the form of inlays in wood, stone, etc., which can also form part of a decorative pattern. Such inlays can even be present prior to the installation of the optical sensor, after which the inlay functions as a virtual keypad. As an illustration, the user can touch points of a star of an inlay in a certain order to gain access to the closed space. The inlay of the star can be located on the physical barrier (e.g. door) or surrounding structure and might have been there years or even centuries prior to the installation of the optical sensor.

Significantly, the virtual keypad can be made very thin since the virtual keypad 4 does not need to contain any physical components. Alternatively, the virtual keypad could be an area of a waterfall wall. In other words, the virtual keypad could form part of liquid material and is not restricted to solid material.

Figs 4A-B are schematic diagrams illustrating embodiments of the virtual keypad 4 of Figs 1 and 3.

In Fig 4A, the virtual keypad 4 comprises numbers 0 to 9, an asterisk '*' and a hash symbol '#', corresponding to a traditional keypad. However, as explained above, in contrast to virtual keypads known in the art, the virtual keypad is non-electric. In this embodiment, a user could get access by touching the numbers in a certain sequence, e.g. 7-9-0-1, detected by the optical sensor as described above.

In Fig 4B, the virtual keypad 4 comprises four pictures of different animals. The sequence to get access to a locked space is then based on a correct sequence of animal pictures touched by the user, e.g. dog-lion-cow-lion-cat, detected by the optical sensor as described above. This can e.g. be used in an environment where pre-school children and/or other illiterate people benefit from the ability of unlocking a door using a virtual keypad.

Other possible embodiments of the virtual keypad include a full QWERTY keyboard, different placements of touch positions of the virtual keypad, etc. To get a higher level of concealment it is even possible to exclude guiding symbols altogether and use a predefined touch area, which the user can touch. The sequence can then e.g. be detected by a relative difference in positions where the user touches.

It is to be noted that it is very easy to switch between different embodiments of the virtual keypad since this is non-electric. No consideration to connections or housing of components needs to be taken.

Moreover, the virtual keypad is more suited to withstand vandalism due to slim design and the absence of moving parts.

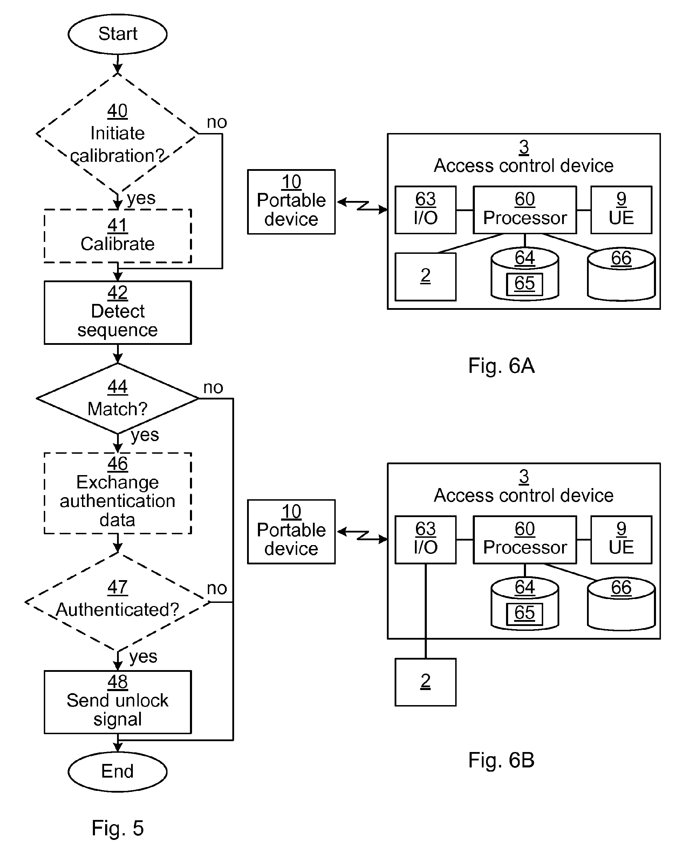

Fig 5 is a flow chart illustrating embodiments of methods performed in the access control device 3 of Fig 1 for authenticating a user for access to a physical space.

The method can be started periodically or when proximity of a user is detected. Optionally, the method is performed repeatedly indefinitely as long as the access control device is operative.

First, an optional calibration stage will be described with reference to an optional conditional *initiate calibration* step 40 and an optional *calibrate* step 41. The calibration stage can be triggered when no calibration has been performed (in initial installation) or optionally by manually setting the access control device in a calibration mode. This manual control of calibration mode can for instance be started by setting a manual switch (e.g. a DIP (dual in-line package) switch) in a particular state. For added security, the manual switch can be placed in a secure area, e.g. on the inside of the physical barrier or in a position where it is only accessible when the physical barrier is open, such as in a location of the door frame which is covered by the physical barrier when this is closed. The calibration can e.g. be performed when the virtual keypad layout is changed, such as from the virtual keypad of Fig 4A to the virtual keypad of Fig 4B. The calibration stage may occur in a different time than the rest of the method.

In the optional conditional *initiate calibration* step 40, it is determined whether calibration is to be initiated. This can e.g. be determined by detecting a long press in a calibration position of the virtual keypad. This detection is performed using the optical sensor as explained above. Long press can be defined as a touch on the virtual keypad longer than a threshold time. Alternatively, calibration is initiated when no calibration has been performed in the access control device, such as when initially installed.

In the optional *calibrate* step 41, a position determination of the optical sensor is calibrated based on the calibration position. Optionally, the preceding and this step can be repeated for more calibration points. Using this and the preceding step, a newly placed (or replaced) virtual keypad can be calibrated for the optical sensor by long pressing a specific virtual key or virtual keys. For instance, on a numeric virtual keypad, this can be calibrated by first long pressing the virtual key for number one and then by long pressing the hash sign '#'.

In a *detect sequence* step 42, a sequence of positions of a user touching a virtual keypad is detected using the optical sensor. As explained above, the virtual keypad is non-electric. In one embodiment, the virtual keypad comprises a piece of paper comprising indications of possible touch positions for a user to enter a code.

This step optionally comprises detecting each position in the sequence of positions by continuously detecting positions of fingers of the user and detecting when a finger touches the virtual keypad.

In a conditional *match* step 44, the access control device determines whether the sequence matches a predetermined sequence. If a match is determined, the method proceeds to an optional *exchange authentication data* step 42 or, if the *exchange authentication data* step 42 is not performed, to a *send unlock signal* step 48. If a match is not determined, the method ends.

In the optional *exchange authentication data* step 46, digital authentication data is exchanged with a portable device of the user. This provides an additional layer of security for the authentication. For instance, this step can comprise challenge-response communication between the access control device and the portable device or reading a magnetic strip of a key card.

In an optional conditional *authenticated* step 47, the access control device determines whether the portable device is authenticated based on the digital authentication data of the preceding step. If authentication is determined, the method proceeds to the *send unlock signal* step 48, otherwise the method ends.

In the *send unlock signal* step 48, an unlock signal is sent to the physical lock device as described above.

It is to be noted that the *initiate calibration* step 40 and the *calibrate* step 41 can be performed in parallel to the rest of the method.

Also, it is to be noted that the *exchange authentication* data step 46 and the conditional *authenticated* step 47 can be performed prior to the *detect sequence* step 42 or in parallel to the rest of the method. Nevertheless, when performed in parallel, the result of the conditional *authenticated* step 47 needs to be communicated such that the send unlock signal 48 is only performed when a positive authentication is determined in the conditional *authenticated* step 47.

Figs 6A-B are schematic diagrams illustrating embodiments of the access control device of Fig 1.

A processor 60 controls the general operation of access control device 3. The processor 60 can be any combination of one or more of a suitable central processing unit (CPU), multiprocessor, microcontroller unit (MCU), digital signal processor (DSP), application specific integrated circuit (ASIC) etc., capable of executing software instructions or otherwise configured to behave according to predetermined logic. Hence, the processor 60 can be capable of executing software instructions 65 stored in a memory 64, which can thus be a computer program product. The processor 60 can be configured to execute the method described with reference to Fig 5 above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 66 is also provided for reading and/or storing data during execution of software instructions in the processor 60, for instance one or more predetermined sequences of positions and/or digital authentication data. This allows for a unique authentication sequence for each user. The data memory 66 can be any combination of read and write memory (RAM) and read only memory (ROM).

The access control device 3 further comprises an I/O interface 63 for communicating with other external entities such as the lock device 1 and optionally a portable device 10, e.g. to exchange digital authentication data. The I/O interface 63 may also comprise a reader for reading key cards with a magnetic strip or a smart card. The I/O interface 63 may support wire-based communication, e.g. using Universal Serial Bus (USB), Ethernet, or even a simple electric connection (e.g. to the lock device 1). Alternatively or additionally, the I/O interface 63 supports wireless communication, e.g. using Bluetooth, Bluetooth Low Energy (BLE), Radio Frequency Identification (RFID), Near Field Communication (NFC), any of the IEEE 802.11 standards, wireless USB, etc.

The portable device 10 is any suitable device portable by a user and which can be used for authentication. The portable device 10 is typically carried or worn by the user and may be implemented as a mobile phone, a smartphone, a key fob, kay card with a magnetic strip and/or smart card, etc.

Optionally, the access control device 3 also includes a user interface 9, e.g. comprising any one or more of, light emitting diodes (LED) or other lights, a display, etc.

An optical sensor 2 is provided, here shown separate from other UI components 9 to emphasise the use of the optical sensor 2. The sensor 2 is described in more detail above with reference to Figs 2, 3, and 4A-B. The optical sensor 2 allows the use of a virtual keypad.

Optionally, the access control device 3 is combined with the lock device 1 in a single device. In such a case, one or more of the components of the access control device 3 can be shared with the lock device 1.

In Fig 6B, an embodiment of the access control device 3 is shown which is similar to the embodiment of Fig 6A. Here, however, the access control device 3 does not comprise the optical sensor 2 internally. Instead, the optical sensor 2 is provided externally from the access control device and is connected via the I/O interface 63.

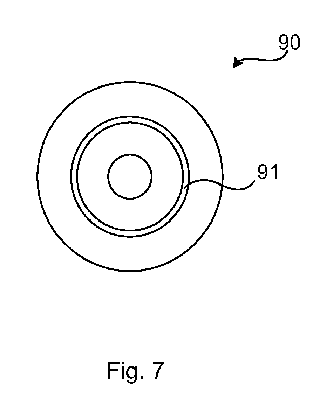

Fig 7 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Figs 6A-B. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for authenticating a user for access to a physical space, the method being performed in an access control device (3) connected to a physical lock device (1), the method comprising the steps of:
detecting (42), using an optical sensor (2), a sequence of positions of a user touching a virtual keypad (4), the virtual keypad (4) being non-electric;
determining (44) whether the sequence matches a predetermined sequence; and
sending (48) an unlock signal to the physical lock device (1) when the sequence matches the predetermined sequence.

2. The method according to claim 1, wherein in the step of detecting, the virtual keypad (4) comprises a piece of paper comprising indications of possible touch positions for a user to enter a code.

3. The method according to claim 1, wherein in the step of detecting, the virtual keypad (4) comprises indications of possible touch positions for a user to enter a code on a piece of glass, brass, wood, or concrete.

4. The method according to any one of the preceding claims, further comprising the steps of:
exchanging (46) digital authentication data with a portable device (10) of the user;
determining (47) whether the portable device (10) is authenticated based on the digital authentication data; and
wherein the step of sending (48) an unlock signal is only performed when the portable device (10) is authenticated.

5. The method according to any one of the preceding claims, further comprising the steps of:
detecting (40) a long press in a calibration position of the virtual keypad (4) using the optical sensor (2); and
calibrating (41) a position determination of the optical sensor (2) based on the calibration position.

6. The method according to any one of the preceding claims, wherein the step of detecting (42) comprises detecting each position in the sequence of positions by continuously detecting positions of fingers of the user and detecting when a finger touches the virtual keypad (4).

7. An access control device (3) arranged to authenticate a user for access to a physical space, the access control device comprising:
a processor (60); and
a memory (64) storing instructions (66) that, when executed by the processor, causes the access control device (3) to:
detect, using an optical sensor (2), a sequence of positions of a user touching a virtual keypad (4), the virtual keypad (4) being non-electric;
determine whether the sequence matches a predetermined sequence; and
send an unlock signal to the physical lock device (1) when the sequence matches the predetermined sequence.

8. The access control device (3) according to claim 7, wherein the virtual keypad (4) comprises a piece of paper comprising indications of possible touch positions for a user to enter a code.

9. The access control device (3) according to claim 7 wherein the virtual keypad (4) comprises indications of possible touch positions for a user to enter a code on a piece of glass, brass, wood, or concrete.

10. The access control device (3) according to any one of claim 7 to 9, further comprising instructions that, when executed by the processor, causes the access control device (3) to:
exchange digital authentication data with a portable device (10) of the user; and
determine whether the portable device (10) is authenticated based on the digital authentication data; and
wherein the instructions to send an unlock signal comprise instructions that, when executed by the processor, causes the access control device (3) to only send the unlock signal when the portable device (10) is authenticated.

11. The access control device (3) according to any one of claims 7 to 10, further comprising instructions that, when executed by the processor, causes the access control device (3) to:
detect a long press in a calibration position of the virtual keypad (4) using the optical sensor (2); and
calibrate a position determination of the optical sensor (2) based on the calibration position.

12. The access control device (3) according to any one of claims 7 to 11, wherein the instructions to detect comprise instructions that, when executed by the processor, causes the access control device (3) to detect each position in the sequence of positions by continuously detecting positions of fingers of the user and detecting when a finger touches the virtual keypad (4).

13. A computer program (90) for authenticating a user for access to a physical space, the computer program comprising computer program code which, when run on a access control device (3) causes the access control device (3) to:
detect, using an optical sensor (2), a sequence of positions of a user touching a virtual keypad (4), the virtual keypad (4) being non-electric;
determine whether the sequence matches a predetermined sequence; and
send an unlock signal to the physical lock device (1) when the sequence matches the predetermined sequence.

14. A computer program product (91) comprising a computer program according to claim 13 and a computer readable means on which the computer program is stored.
